# FASCICULE DE BREVET EUROPEEN

(11) **EP 3 079 790 B1**
(45) Date de publication et mention de la délivrance du brevet: **21.02.2018**
(21) Numéro de dépôt: 14806328.2
(22) Date de dépôt: 04.12.2014
(51) Int. Cl.: B01D 35/143, B01D 35/18, B01D 29/60

(54) **DISPOSITIF DE DECLENCHEMENT D'UN SIGNAL ELECTRIQUE POUR FILTRE A SOLUTION AQUEUSE**
VORRICHTUNG ZUM AUSLÖSEN EINES ELEKTRISCHEN SIGNALS FÜR EIN FILTER MIT EINER WÄSSRIGEN LÖSUNG
DEVICE FOR TRIGGERING AN ELECTRICAL SIGNAL FOR A FILTER WITH AN AQUEOUS SOLUTION

(30) Priorité: 12.12.2013 FR 1362510
(43) Date de publication de la demande: 19.10.2016
(73) Titulaire: Delphi International Operations Luxembourg S.à r.l., 4940 Bascharage (LU)
(72) Inventeur: DANIEL, Patrick, F-41000 Blois (FR); AMAND, Alain, F-41000 Blois (FR)
(74) Mandataire: Delphi France SAS
(86) Numéro de dépôt international: PCT/EP2014/076641
(87) Numéro de publication internationale: WO 2015/086440

(56) Documents cités:
- WO-A1-2011/060254
- WO-A1-2012/007337
- WO-A1-2013/178352

## Description

### DOMAINE TECHNIQUE

La présente invention concerne le domaine des filtres à solution aqueuse appliqués aux systèmes de réduction catalytique sélective pour des moteurs à combustion interne.

### ARRIERE-PLAN TECHNOLOGIQUE DE L'INVENTION

La présente invention concerne les dispositifs de filtration utilisés pour les systèmes de réduction catalytique sélective (SCR). Le système SCR est un système de dépollution qui réduit les émissions d'oxydes d'azote (NOx), ce qui permet de respecter les limites d'émission de NOx de la norme Euro 6. Différentes technologies de SCR ont été développées à base de solution d'urée. L'injection de l'urée à l'échappement permet la réduction des oxydes d'azote NOx avec des catalyseurs en présence d'oxygène. La solution aqueuse à 32% d'urée est la solution aqueuse eutectique, et définit l'agent de réduction standard appelé AUS32, AdBlue®, ou DEF (Diesel Exhaust Fluid). Cependant cette solution aqueuse eutectique souffre de problèmes qui accroissent la complexité de sa mise en place comme en autre le point de gel -11°C, de sorte que des solutions ont été recherchées comme le réchauffement du liquide aqueux afin que le système SCR reste fonctionnel. Il existe une autre solution aqueuse composée d'urée et de formate d'ammonium dont le point de gel est à -30°C. Des solutions de chauffage ont été proposées pour résoudre le problème de gel à -11°C comme des éléments chauffants intégrés (FR2916188) Pour ces informations, la logique de contrôle utilise classiquement l'information température pour déclencher le chauffage de la solution aqueuse. De plus comme les solutions peuvent présenter des impuretés et que les valeurs des points de gel peuvent aller de -11°C à 0°C, la logique de contrôle doit donc actionner le chauffage jusqu'à 0°C pour s'assurer du passage de la phase solide à la phase liquide. On connait de WO2013/178352 l'utilisation d'un capteur de pression agencé dans le filtre et qui permet une détermination indirecte des variations de volume.

Nous allons présenter l'invention qui propose un dispositif de déclenchement du système de chauffage de la solution aqueuse lorsque la solution aqueuse est en phase solide.

### RESUME DE L'INVENTION

La présente invention vise à résoudre notamment les problèmes mentionnés précédemment en proposant une solution détectant la phase de la solution, qu'elle soit solide ou liquide, autorisant ainsi le déclenchement du chauffage de la solution aqueuse. La solution aqueuse peut être une solution à base d'urée. Le système de réduction catalytique sélective de véhicule diesel comprend un boitier pourvu d'une entrée et d'une sortie et à l'intérieur duquel est agencé un élément filtrant et un moyen de détection des variations de volume liés aux changements de phase de la solution aqueuse caractérisé en ce que le filtre est de plus pourvu des moyens de signalisation desdits changement de volume de la phase de la solution aqueuse. Les moyens de signalisation peuvent comprendre un interrupteur commutant lors des changements de phase. De plus les moyens de signalisation comprennent une membrane déformable et coopérant avec l'interrupteur pour signaler un changement de phase. Egalement la membrane définit une chambre d'expansion desdites variation de volume. La chambre peut être remplie d'un gaz ou d'une mousse souple. La membrane peut également être plane.

L'interrupteur peut également se situer dans la chambre d'expansion.

L'interrupteur peut comprendre au moins un contact agencé sur la membrane.

L'interrupteur de type Reed peut également être activé par un aimant, l'interrupteur ou l'aimant étant agencé sur la membrane. Le filtre comprend de plus un moyen de chauffage intégré à l'élément filtrant.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue en coupe qui représente le système de commande d'interrupteur mécanique lorsque la phase est liquide
- la figure 2 est une vue en coupe qui représente le système de commande d'interrupteur mécanique lorsque la phase est solide. - la figure 3 est une vue en coupe qui représente le système de commande d'interrupteur avec des contacts intégrés à l'élément déformable lorsque la phase est liquide
- la figure 4 est une vue en coupe qui représente le système de commande d'interrupteur avec des contacts intégrés à l'élément déformable lorsque la phase est solide.
- la figure 5 est une vue en coupe du système de commande d'interrupteur Reed lorsque la phase est liquide.
- la figure 6 est une vue en coupe du système de commande d'interrupteur Reed lorsque la phase est solide.
- la figure 7^{e} est une représentation de l'élément filtrant plissé.

### DESCRIPTION DES MODES DE REALISATION PREFERES

Dans la suite de la description, des éléments identiques ou similaires seront désignés par les mêmes références. Dans un but de clarté et de concision de la description une orientation de haut en bas selon le sens de la figure sera utilisé sans aucune intention limitative quant à l'étendue de la protection, notamment au regard des différentes installations d'un boitier de filtre. Des mots tels que « haut, bas, inferieur, supérieur ... » seront utilisés sans intention limitative.

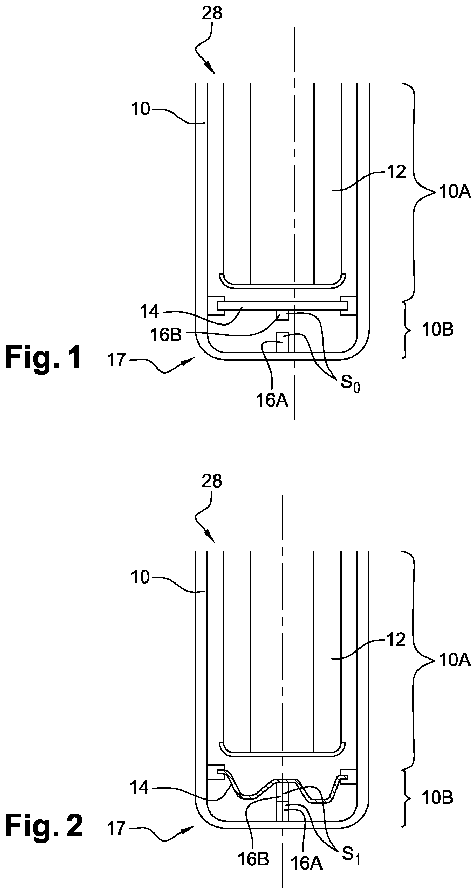

Dans un premier mode de réalisation (Fig 1 , Fig 2), l'invention décrit un moyen de déclenchement, qui possède un système de commande d'interrupteur 16 de type mécanique, d'un signal électrique lors d'un changement de phase de la solution aqueuse. Un système de déclenchement d'un signal électrique se situe à l'intérieur d'un boitier 10 de filtre à solution aqueuse. Le boitier 10 est constitué de deux demi boites de filtre 28, qui sont réalisés par des systèmes d'injection de matières plastiques, soit par des systèmes de formage de matière métallique. Les deux parties correspondent pour l'une à la partie basse 10B du boitier et pour l'autre à la partie haute du boitier 10A. Le système de déclenchement comprend une membrane 14 qui se situe préférentiellement dans le fond du boitier 10B, en dessous de la couche filtrante 12. La membrane 14 est déformable lors du passage de la phase liquide à la phase solide de la solution aqueuse. Lors du changement de phase, le volume de la solution aqueuse augmente et vient pousser la membrane 14 située en dessous. La membrane 14 est fixée et retenue sur sa périphérie par collage, surmoulage, ou par un système de pincement qui consiste à la fermeture des deux boites sur la membrane 14 par différents moyens d'assemblage étanche qui sont les suivants pour les matières plastiques : la méthode de soudure à chaud, les trois méthodes de soudure par vibration (soudage par ultrasons, soudure par vibrations ou bien la combinaison des deux méthodes ultrasons et vibrations). La membrane 14 comprend le premier contact électrique 16A du système de commande d'interrupteur mécanique collé sur la membrane 14 orienté vers le fond du boitier inférieur 10B. Le second contact électrique 16B du système de commande d'interrupteur mécanique est monté en regard et collé dans le fond du boitier inférieure 10B, et orienté vers la partie supérieure du boitier 16A. Lors du changement de phase, de la phase liquide à la phase solide de la solution aqueuse, son volume augmente et déforme la membrane 14 qui vient faire toucher les 2 contacts électriques 16 A et 16B du système de signalisation (voir R1) 16 et s'en suit la fermeture de l'interrupteur, ce qui déclenche ensuite un signal électrique S1 qui permettra de démarrer le système de chauffage de la solution aqueuse.

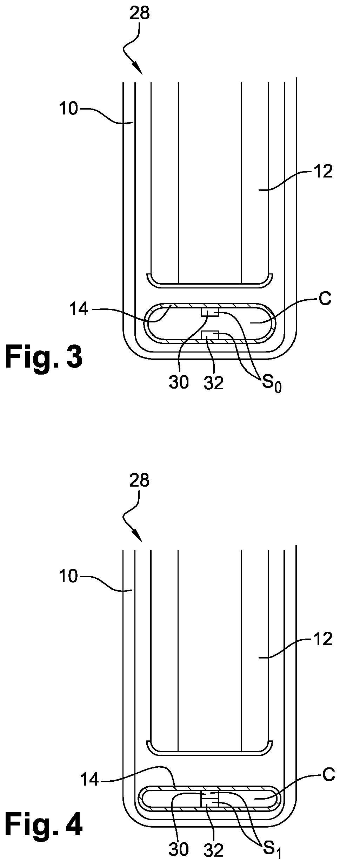

Dans un second mode de réalisation (Fig 3, Fig 4), l'invention décrit un système de déclenchement d'un signal électrique lors d'un changement de phase de la solution aqueuse qui possède un système de commande d'interrupteur 16 de type contact électrique sur membrane. Le système de déclenchement d'un signal électrique se situe à l'intérieur d'un boitier 10 de filtre à solution aqueuse. Le système de déclenchement comprend une membrane 14 qui se situe préférentiellement dans le fond du boitier 10B, en dessous de la couche filtrante 12. La membrane 14 est constituée d'une enveloppe fermée de forme ronde, sphéroïde, rectangulaire à bord rond ou en forme de ballon de rugby. La membrane 14 est déformable lors du changement de phase, de la phase liquide à la phase solide de la solution aqueuse, et réciproquement. La membrane 14 renferme soit un gaz, soit une mousse souple. Lors du changement du gel de la phase liquide, son volume augmente et vient pousser la membrane 14 située en dessous. La membrane 14 comprend deux contacts électriques, situé l'un en face de l'autre, de part et d'autre de la membrane, le premier contact en haut sur la membrane et le second contact en bas sur la membrane, qui sont soit surmoulés ou collés sur la membrane 14, à l'intérieur de la chambre intérieur (C). Lors du passage de la phase liquide à la phase solide de la solution aqueuse, son volume augmente et déforme la membrane 14 qui vient faire toucher les 2 contacts du système d'interrupteur 16 , ce qui ferme l'interrupteur qui lui-même déclenche un signal électrique S1 afin de permettre de démarrer le système de chauffage de la solution aqueuse.

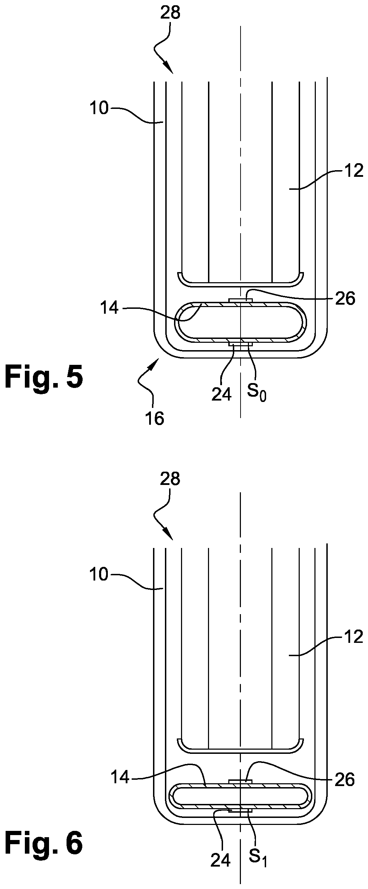

Dans un troisième mode de réalisation Fig5, Fig 6), l'invention décrit un dispositif de déclenchement d'un signal électrique lors d'un changement de phase, de la phase liquide à la phase solide de la solution aqueuse, et réciproquement. Ce dispositif possède un système de commande d'interrupteur 16 de type contact Reed (interrupteur magnétique placé dans une bille de verre protectrice). Le dispositif de déclenchement d'un signal électrique se situe à l'intérieur d'un boitier 10 du filtre. Le dispositif de déclenchement comprend une membrane 14 qui se situe préférentiellement dans le fond du boitier 10B, en dessous de la couche filtrante 12. La membrane 14 est déformable lors du passage de la phase liquide à la phase solide de la solution aqueuse. La membrane 14 est constitué d'une enveloppe fermée de forme ronde, sphéroïde, rectangulaire à bord rond ou en forme de ballon de rugby. La membrane 14 renferme soit un gaz, soit une mousse souple. Lors du changement de phase, le volume de la solution aqueuse augmente et vient pousser la membrane 14 située en dessous. La membrane 14 comprend un aimant et un interrupteur Reed, situé l'un en face de l'autre par rapport au centre du volume qui sont soit fixée par collage ou autre système de fixation. Lors du passage en phase solide de la solution aqueuse, son volume augmente et déforme la membrane 14 qui vient rapprocher l'aimant 26 de l'interrupteurs Reed 24. Lorsque l'aimant se rapproche de l'interrupteur Reed 24, l'interrupteur Reed 24 se ferme et déclenche un signal électrique S1 pour permettre de démarrer le système de chauffage de la solution aqueuse. La logique de l'interrupteur peut être inversée : l'augmentation de la volume de la phase solide vient rapprocher l'aimant de l'interrupteur Reed qui alors s'ouvre ; le contrôleur de réchauffage, de type circuit électronique ou relais électromécanique, alimente alors le réchauffage.

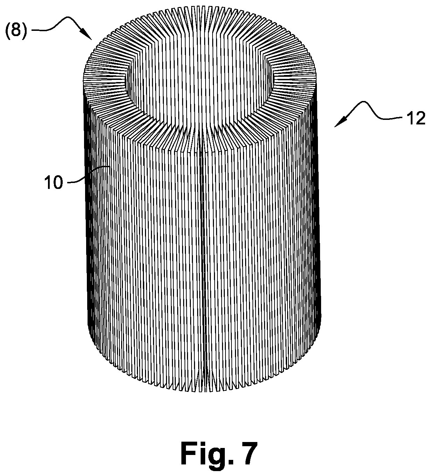

Conformément à la figure 7, nous avons, par exemple, un élément filtrant 8 du filtre à solution aqueuse pourvu d'un moyen de chauffage 12 par exemple intégré à une couche filtrante 10.

Dans un premier mode de réalisation, un moyen de chauffage 12 est totalement intégré dans la couche filtrante 10. La couche filtrante 10 est composée de préférence d'un média à base de cellulose avec des charges de carbone, le carbone étant un conducteur électrique. Alternativement, la charge de carbone peut être remplacée par des pistes d'impression à encre conductrice ou tout autre élément conducteur électrique. La propriété de conducteur électrique des charges de carbone et des pistes d'impression à encre conductrice ou tout autre élément conducteur électrique permet de libérer de la chaleur au travers de ces éléments par effet Joules. La couche filtrante peut-être également composée d'un média à base de tissu synthétique. Un dispositif de moyen de chauffage est complétement décrit dans la demande déposée ce jour sous le titre « Filtre à solution aqueuse avec moyen de chauffage ».

## Revendications

1. Filtre à solution aqueuse (28), telle que l'urée, d'un système de réduction catalytique sélective de véhicule diesel, le filtre comprenant un boitier pourvu d'une entrée et d'une sortie et, à l'intérieur duquel est agencé un élément filtrant, et d'un moyen de détection des variations de volume liés aux changements de phase de la solution aqueuse, le filtre étant de plus pourvu de moyens de signalisation (17) desdits changement de volume de la phase de la solution aqueuse, **caractérisé en ce que**
les moyens de signalisation (17) comprennent un interrupteur (16) commutant lors des changements de phase.

2. Filtre (28) selon la revendication 2 dans lequel les moyens de signalisation (17) comprennent de plus une membrane (14) déformable et coopérant avec l'interrupteur pour signaler un changement de phase.

3. Filtre (28) selon la revendication 3 dans lequel la membrane (14) définit une chambre (C) d'expansion desdites variation de volume.

4. Filtre (28) selon la revendication précédente dans lequel la chambre (C) est remplie d'un gaz ou d'une mousse souple.

5. Filtre (28) selon la revendication 3 dans lequel la membrane est plane.

6. Filtre (28) selon la revendication 4, dans lequel l'interrupteur (16) se situe dans la chambre (C).

7. Filtre (28) selon la revendication 3 dans lequel l'interrupteur comprend au moins un contact agencé sur la membrane (14).

8. Filtre (28) selon la revendication 4, dans lequel l'interrupteur (24) est activé par un aimant (26), l'interrupteur étant de type Reed, l'interrupteur ou l'aimant étant agencé sur la membrane.

9. Filtre selon l'une quelconque des revendications précédentes, dans lequel le filtre comprend un moyen de chauffage (12) intégré à l'élément filtrant (10).

## Patentansprüche

1. Filter mit wässriger Lösung (28), wie etwa Harnstoff, für eine Einrichtung zur selektiven katalytischen Reduktion von Dieselfahrzeugen, wobei der Filter ein Gehäuse enthält, das mit einem Einlass und einem Auslass versehen ist und in dessen Inneren ein Filterelement angeordnet ist, sowie mit einer Detektionsvorrichtung zum Erfassen von Volumenänderungen im Zusammenhang mit Phasenwechsel der wässrigen Lösung, wobei der Filter ferner mit Signalisierungsvorrichtungen (17) zum Signalisieren der Volumenänderungen der Phase der wässrigen Lösung versehen ist, **dadurch gekennzeichnet, dass**
die Signalisierungsmittel (17) einen Schalter (16) enthalten, der bei Phasenwechsel umschaltet.

2. Filter (28) nach Anspruch 1, wobei die Signalisierungsvorrichtungen (17) ferner eine verformbare Membran (14) enthalten, die mit dem Schalter zusammenwirkt, um einen Phasenwechsel zu signalisieren.

3. Filter (28) nach Anspruch 2, wobei die Membran (14) eine Expansionskammer (C) für die Volumenänderungen definiert.

4. Filter (28) nach dem vorangehenden Anspruch, wobei die Kammer (C) mit einem Gas oder einem weichen Schaum gefüllt ist.

5. Filter (28) nach Anspruch 3, wobei die Membran flach ist.

6. Filter (28) nach Anspruch 4, wobei der Schalter (16) sich in der Kammer (C) befindet.

7. Filter (28) nach Anspruch 3, wobei der Schalter zumindest einen an der Membran (14) angeordneten Kontakt enthält.

8. Filter (28) nach Anspruch 4, wobei der Schalter (24) über einen Magneten (26) aktiviert wird, wobei der Schalter als Reed-Schalter ausgeführt ist und wobei der Schalter bzw. der Magnet an der Membran angeordnet ist.

9. Filter nach einem der vorangehenden Ansprüche, wobei der Filter eine dem Filterelement (10) integrierte Heizeinrichtung (12) enthält.

## Claims

1. A filter (28) for an aqueous solution, such as urea, of a diesel vehicle selective catalytic reduction system, the filter comprising a housing provided with an inlet and with an outlet and, inside which, is arranged a filter element, and with a means of detecting variations in volume associated with the changes in phase of the aqueous solution, the filter additionally being provided with signaling means (17) for signaling said changes in volume of the phase of the aqueous solution, **characterized in that**
the signaling means (17) comprise a switch (16) that switches upon changes in phase.

2. The filter (28) as claimed in claim 1, in which the signaling means (17) additionally comprise a deformable membrane (14) collaborating with the switch to signal a change in phase.

3. The filter (28) as claimed in claim 2, in which the membrane (14) defines an expansion chamber (C) for said variations in volume.

4. The filter (28) as claimed in the preceding claim, in which the chamber (C) is filled with a gas or with a soft foam.

5. The filter (28) as claimed in claim 2, in which the membrane is planar.

6. The filter (28) as claimed in claim 3, in which the switch (16) is situated in the chamber (C).

7. The filter (28) as claimed in claim 2, in which the switch comprises at least one contact arranged on the membrane (14).

8. The filter (28) as claimed in claim 3, in which the switch (24) is activated by a magnet (26), the switch being a Reed-type switch, the switch or the magnet being arranged on the membrane.

9. The filter as claimed in any one of the preceding claims, in which the filter comprises a heating means (12) incorporated into the filter element (10).
